# EUROPÄISCHE PATENTSCHRIFT

(11) **EP 1 109 123 B1**
(45) Veröffentlichungstag und Bekanntmachung des Hinweises auf die Patenterteilung: **24.02.2010**
(21) Anmeldenummer: 99125113.3
(22) Anmeldetag: 16.12.1999
(51) Int. Cl.: G06K 7/08

(54) **Spulenanordnung für induktive kontaktlose Karten- und ID-Systeme**
Coil arrangement for inductively coupled contactless card- and ID-systems
Arrangement de bobines pour cartes et systemes d'identification sans contact à couplage inductif

(43) Veröffentlichungstag der Anmeldung: 20.06.2001
(73) Patentinhaber: Infineon Technologies AG, 85579 Neubiberg (DE)
(72) Erfinder: Reiner, Robert, 85579 Neubiberg (DE)

(56) Entgegenhaltungen:
- EP-A- 0 740 262
- WO-A-98/32092
- US-A- 4 243 980
- US-A- 4 274 090

## Beschreibung

Die vorliegende Erfindung betrifft eine Spulenanordnung für induktive kontaktlose Karten- und ID-Systeme, bei der bei einem Durchgangsbereich beidseitig von diesem auf der einen Seite eine erste Spule und auf der anderen, zur einen Seite gegenüberliegenden Seite eine zweite Spule vorgesehen sind, wobei beide Spulen mit einer Schreib/Lese-Station verbunden sind.

Diese Anordnung der Spulen auf beiden Seiten des Durchgangsbereichs zur Detektion ist beispielsweise aus der EP 0 740 262, der WO 98/32092 und der US 4,274,090 bekannt. In der US 4,243,980, dem nächsten Stand der Technik, ist eine Anordnung mit drei Spulen zur Detektion zweier benachbarter Durchgangsbereiche beschrieben.

Induktive kontaktlose Karten- und ID- (bzw. Identifikations-) Systeme sind an sich in ihrer Reichweite stark beschränkt, da diese mit stationären Feldern und nicht mit Wellen arbeiten. Gerade in einem Bereich "Vicinity" (bzw. Nähe), der bis etwa 1 m reicht, fällt die elektrische und/oder magnetische Feldstärke mit der dritten Potenz zum Abstand von einem Sender ab. Aus diesem Grund werden für Vicinity-Karten derzeit etwa die folgenden Betriebsbereiche genannt: 70 cm für Lesen der Karte, 50 cm für Authentifizierung der Karte und 30 cm für deren Programmierung. Diese Betriebsbereiche sind zu klein, da bei möglichen praktischen Anwendungen Durchgangsbreiten für Personen in der Größenordnung von etwa 1 m und darüber hinaus verlangt werden.

Um induktive kontaktlose Karten- und ID-Systeme dennoch auch für Durchgangsbreiten von etwa 1 m einsetzen zu können, werden derzeit an einem solchen Durchgang für eine Schreib/Lese-Station zwei Spulen in der eingangs genannten Art derart eingesetzt, daß gleichzeitig das elektrische bzw. magnetische Feld, ausgehend von beiden Seiten des Durchganges, erzeugt wird. Mit anderen Worten, jeweils eine Spule wird beidseitig des Durchganges verwendet. Ein derartiges Vorgehen ermöglicht zwar Durchgangsbreiten von etwa 1 m. Es hat aber den Nachteil, daß die als Sender wirkende Spule selbst durch ihr Rauschen ein Störsignal erzeugt und so die Empfindlichkeit der als Empfänger arbeitenden gleichen Spule einschränkt. Aus diesem Grund hat sich diese Methode nicht als ausreichend erwiesen, um die Reichweite des induktiven kontaktlosen Karten- und ID-Systems im geforderten Ausmaß zu erhöhen. Dies gilt insbesondere für sog. "aktive" Karten oder ID-Tags (bzw. -Streifen), die jeweils aus einer Batterie versorgt werden, weil bei diesen die Reichweite hauptsächlich durch die Empfindlichkeit des Empfängers begrenzt wird.

Ein weiterer Nachteil dieses bestehenden kontaktlosen Karten- und ID-Systems ist darin zu sehen, daß gleichzeitig beide Spulen als Sender arbeiten, was die Abstrahlung erhöht, wodurch für eine Funkzulassung Probleme hervorgerufen werden können. Um dem zu begegnen, müssen die Magnetfelder der Spulen gegeneinander gerichtet werden, so daß zwar eine erwünschte Fernfeldkompensation erreicht wird, was aber in der Mitte des Magnetfeldes eine Nullstelle ergibt, in der die Karte nicht betrieben werden kann.

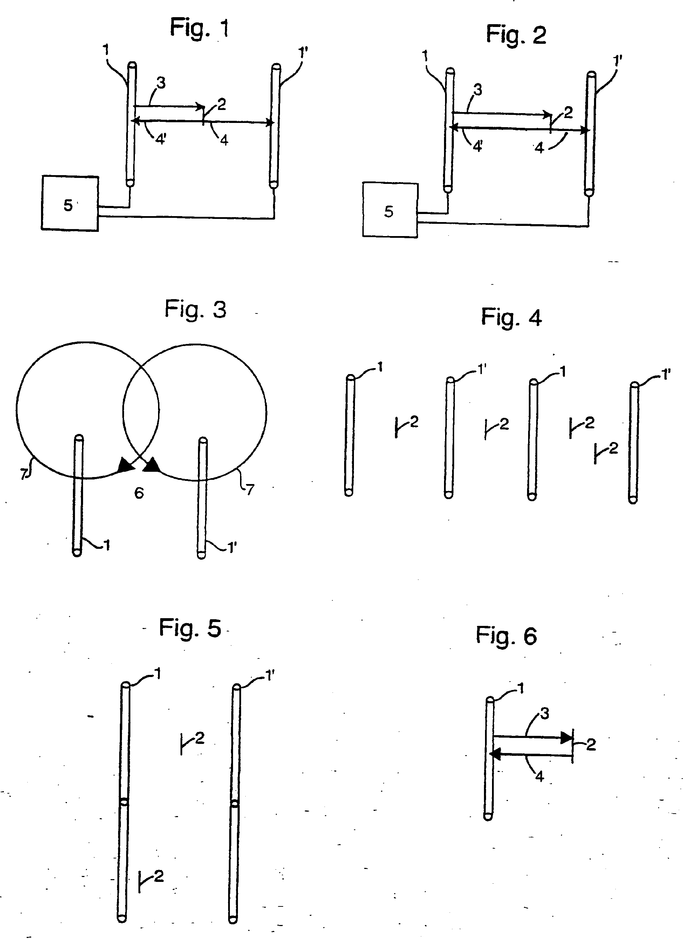

Fig. 6 zeigt eine bestehende Spulenanordnung mit einer Schreib/Lese-Station aus einer als Sende/Empfangs-Antenne wirkenden Spule 1, die zu einer Karte bzw. einem ID-Tag 2 Energie abgibt sowie Daten liefert ("Daten-down-link"), was durch einen Pfeil 3 veranschaulicht ist, und von der Karte bzw. dem ID-Tag 2 Daten aufnimmt ("Daten-up-link"), was durch einen Pfeil 4 angedeutet ist.

Die oben bereits erwähnte Schreib/Lese-Station mit zwei Spulen verwendet zwei Anordnungen der in Fig. 6 gezeigten Art, wobei jeweils eine Anordnung auf einer Seite des Durchganges vorgesehen wird. Es ist aber auch mit einer solchen beidseitigen Schreib/Lese-Station nicht möglich, eine ausreichende Durchgangsbreite bei guter Empfindlichkeit und ohne erhöhte Abstrahlung zu gewährleisten.

Es ist daher Aufgabe der vorliegenden Erfindung, eine Spulenanordnung für induktive kontaktlose Karten- und ID-Systeme anzugeben, mit der eine ausreichende Durchgangsbreite von etwa 1 m und darüber gewährleistet werden kann, die sich weiterhin durch eine hohe Empfindlichkeit auszeichnet und die schließlich keine Probleme infolge erhöhter Abstrahlung hervorruft.

Diese Aufgabe wird mit einer Spulenanordnung gemäß Anspruch 1 gelöst.

Bei der erfindungsgemäßen Spulenanordnung werden also zunächst, wie bei der obigen bestehenden Spulenanordnung, zwei Spulen verwendet, von denen jeweils eine links bzw. rechts oder oben bzw. unten von einem Durchgangsbereich angebracht ist. Wesentlich ist nun, daß von diesen beiden Spulen zu einem Zeitpunkt die eine Spule, also beispielsweise die "linke" Spule als Sender betrieben wird, während die "rechte" Spule als Empfänger wirkt. Außerdem werden alternierend die Rollen der jeweiligen Spulen vertauscht. Das heißt, zu einem folgenden Zeitpunkt wirkt die linke Spule als Empfänger, während die rechte Spule als Sender betrieben ist.

Mit anderen Worten, bei der erfindungsgemäßen Spulenanordnung weist so die am Durchgangsbereich angebrachte Schreib/LeseStation zwei Antennen in der Form der beiden Spulen auf, bei denen aber die Funktionen für Empfangen und Senden getrennt sind.

Damit ermöglicht die erfindungsgemäße Spulenanordnung zahlreiche Vorteile, welche mit der bestehenden Spulenanordnung aus zwei links und rechts vom Durchgangsbereich angeordneten Spulen nicht zu erzielen sind: Beim Betrieb einer Spule gleichzeitig als Sende- und Empfangsspule nimmt das Empfangssignal sehr stark mit der Entfernung zwischen Spule und Tag ab, da sowohl auf dem Weg von der Spule zum Tag wie auch vom Tag zur Spule die Kopplung - wie bereits erwähnt - mit der dritten Potenz zum Abstand abnimmt.

Beim Betrieb eines passiven Tags - also eines Tags ohne Batterie oder dergleichen - kann zwischen Energiereichweite (down-link) und Datenreichweite (up-link) unterschieden werden.

Bei der Trennung der Funktion Senden und Empfangen auf zwei räumlich getrennte Spulen und einem zwischen beiden Spulen gelegenen Tag nimmt die Entfernung zur Empfangsspule ab, wenn sich die Entfernung zur Sendespule vergrößert. Unter der Voraussetzung, dass die Energiereichweite größer ist als die halbe Durchgangsbreite, ergibt sich dann ein stärkeres Empfangssignal in der Empfangsspule, wenn das Tag weiter als die halbe Durchgangsbreite von der Sendespule entfernt ist. Das Tag wird so weit zuverlässiger als mit Spulen, die gleichzeitig die Sende- und Empfangsfunktion ausüben, betrieben, weil eine Kommunikation mit dem Tag sich sowohl dann einstellen kann, wenn das Tag über die halbe Durchgangsbreite von der Sendespule entfernt ist, als auch nach einer Umschaltung, wenn das Tag näher zu der Sendespule liegt. Da im größten Teil des Raumes zwischen den Spulen die Feldrichtung vor und nach der Umschaltung verschieden ist, bedeutet die Ausdehnung des Funktionsabstandes über die halbe Durchgangsbreite hinaus eine wesentliche Erhöhung der Betriebssicherheit.

Die alternierenden elektrischen bzw. magnetischen Felder sind am Ort des ID-Tags unterschiedlich gerichtet, was die Erfassungswahrscheinlichkeit verbessert. Schließlich lassen sich Durchgangsbereiche direkt nebeneinander anschließend aufbauen. Dies wird auch noch weiter unten näher erläutert werden.

Eine höhere Empfindlichkeit des an die Empfangsantenne angeschlossenen Empfängers ist dadurch bedingt, daß eine hohe Sendespannung wie bei einem an eine Sende/Empfangs-Antenne angeschlossenen Empfänger entfallen kann, so daß auch kein Rauschen des Senders die Empfindlichkeit beeinträchtigt. Dies ist besonders dann von Bedeutung, wenn das ID-Tag mit einer Batterie versorgt ist und damit kleinere Spannungen im Schwingkreis des ID-Tags zu verarbeiten sind. In diesem Fall ist die Modulation des ID-Tags geringer, und die Reichweite der Spulenanordnung wird durch den vom ID-Tag zur Spule geführten Kanal begrenzt.

Der wechselseitige Betrieb der Spulen als Sende/Empfangs- Antenne bzw. als reine Empfangsantenne führt zu einer doppelten Feldform: an jedem beliebigen Punkt des elektrischen bzw. magnetischen Feldes ist das Feld einmal in eine und das andere Mal in eine andere Richtung ausgerichtet. Dies verringert das Risiko, daß ein ID-Tag wegen seiner räumlichen Orientierung nicht erfaßt werden kann.

Soll der Durchgangsbereich weiter vergrößert werden, dann kann ohne weiteres auch eine Mehrfach-Spulenanordnung eingesetzt werden, bei der sich die elektrischen und magnetischen Felder nicht stören. Die Spulen der Sendeantennen werden dabei gegenphasig betrieben, wobei sich eine Nullstelle der Einkopplung von den Sendeantennen am Ort der Empfangsantenne ergibt, was aber nicht stört, da das von den ID-Tags gelieferte Signal keine Nullstelle hat. Durch die gegenphasige Speisung der Spulen der Sendeantennen tritt zudem eine erwünschte Kompensationswirkung im Fernfeld auf.

Eine Fernfeldkompensation ist auch bei einem einfachen Durchgang mit einer Durchgangsbreite von etwa 1 m möglich, indem fernfeldkompensierte Spulen eingesetzt werden.-Eine derartige fernfeldkompensierte Spule kann beispielsweise so gestaltet werden, daß eine gegenphasig betriebene Spule unter eine erste Spule gesetzt wird, so daß im Prinzip eine Spule in der Form einer "8" entsteht. Eine derartige Spulengestaltung ist auch zweckmäßig, um einen Durchgangsbereich in der Größe einer Person zu erfassen.

Nachfolgend wird die Erfindung anhand der Zeichnungen näher erläutert. Es zeigen:
Fig. 1 eine Prinzipdarstellung der erfindungsgemäßen Spulenanordnung,
Fig. 2 eine Abwandlung von Fig. 1 zur weiteren Erläuterung der Arbeitsweise der erfindungsgemäßen Systemanordnung,
Fig. 3 eine Darstellung zur Erläuterung der sich ergebenden unterschiedlichen Feldrichtungen bei einem wechselseitigen Betrieb der erfindungsgemäßen Spulenanordnung,
Fig. 4 eine Prinzipdarstellung zur Erläuterung einer möglichen Vergrößerung des Durchgangsbereiches durch eine Mehrfach-Spulenanordnung,
Fig. 5 den Aufbau von fernfeldkompensierten Spulen und
Fig. 6 den Aufbau einer herkömmlichen Spulenanordnung.

Die Fig. 6 ist bereits eingangs erläutert worden. In den Fig. 1 bis 5 werden für einander entsprechende Bauteile die gleichen Bezugszeichen wie in Fig. 6 verwendet.

Fig. 1 zeigt eine Sende Antenne in der Form einer ersten Spule 1, eine Empfangsantenne in der Form einer zweiten Spule 1' und einen ID-Tag 2, der sich in einem Durchgangsbereich zwischen den beiden Spulen 1, 1' befindet.

Wie in Fig. 6 symbolisiert ein Pfeil 3 die Übertragung von Energie bzw. die Zufuhr von Daten von der Spule 1 zum ID-Tag 2, während ein Pfeil 4 die Abgabe von Daten vom ID-Tag zur Spule 1' repräsentiert. Daten, die vom ID-Tag zur Spule 1 gelangen, sind durch einen Pfeil 4' symbolisiert.

Die Spulen 1, 1' sind mittels einer Schreib/Lese-Station 5 so angesteuert, daß die Spule 1 zunächst als Sende antenne wirkt, während die Spule 1' als Empfangsantenne arbeitet. In einem folgenden Zeitpunkt wird die Funktion der Spulen 1, 1' alterniert. Das heißt, die Spule 1' arbeitet dann als Sende antenne, während die Spule 1 als Empfangsantenne wirkt.

Durch diesen Betrieb werden die Funktionen für Empfangen und Senden getrennt, was die oben aufgezeigten und im Folgenden anhand von Fig. 2 näher erläuterten Vorteile mit sich bringt.

Aus Fig. 2 die Keine Ausführungsform der Erfindung zeigt, ist zu ersehen, dass das Empfangssignal in der als "Empfangsantenne" betriebenen Spule 1' starker sein wird als das Signal in der als Sende/Empfangsantenne dienenden Spule 1, wenn das Tag 2 sich näher an der Spule 1' befindet als an der Spule 1. Bei aktiven Tags 2 ist die down-link-Reichweite größer als bei passiven Tags, da über den down-link-Weg keine oder nur wenig Energie übertragen werden muss. Da diese möglicherweise wie die passiven Tags auch mit Belastungsmodulation arbeiten, also nur das von der Sendeantenne erzeugte Feld modulieren, wird das zurückgesendete Signal (up-link) bei großer Entfernung von der Sendeantenne sehr schwach. Hier bietet die räumlich getrennte Empfangsantenne - also die Spule 1' - einen entscheidenden Vorteil, weil sie in diesen Fällen näher am Tag 2 ist als die als Sende/Empfangsantenne arbeitende Spule 1. Trotzdem ist es sinnvoll, auch über die Sendeantenne gleichzeitig zu empfangen, denn das Tag 2 kann sich auch in der Nähe der Sendeantenne befinden.

Ein anderer bedeutender Vorteil ist, dass das Sendesignal in der räumlich getrennten Empfangsantenne (im vorliegenden Beispiel Spule 1') nur eine sehr viel kleinere Spannung erzeugt als in der Sende/Empfangsantenne. Damit ist das Rauschen des Senders in der Empfangsantenne reduziert und die Empfindlichkeit des Empfängers an der Empfangsantenne kann erhöht werden. Dadurch lassen sich auch schwächere up-link-Signale auswerten. Dieser Vorteil kann in einer größeren Durchgangsbreite und/oder in einem verringerten Modulationshub des Tags 2 genutzt werden. Ein verringerter Modulationshub des Tags 2 ist vorteilhaft, weil er auch bei schwächeren Feldern noch eine ausreichende Energie- und Taktversorgung des Tags 2 erlaubt.

Fig. 3 erläutert, wie sich durch den alternierenden Betrieb der Spulen 1, 1' als Sende Antenne bzw. als Empfangsantenne unterschiedliche Richtungen des elektrischen Feldes (vgl. die Feldlinien 7) ergeben. Infolge der dadurch enstehenden "doppelten" Feldform ist das elektrische Feld in einem beliebigen Punkt einmal in die eine Richtung und das andere Mal in eine andere Richtung ausgerichtet, wie dies durch Pfeile 6 in Fig. 2 veranschaulicht ist. Durch diese unterschiedliche Ausrichtung des elektrischen Feldes an einem Ort wird die Gefahr wesentlich verringert, daß ein ID-Tag 2 infolge einer unglücklichen räumlichen Orientierung nicht erfaßt werden kann.

Fig. 4, die Keine Ausführungsform der Erfindung ist, zeigt, wie eine Mehrfach-Spulenanordnung mit Spulen 1, 1' gestaltet werden kann, bei der die Spulen 1 als Sende/Empfangs-Spulen und die Spulen 1' als Empfangsspulen arbeiten. Bei einer solchen Gestaltung stören die Felder einander nicht. Die als Sende/Empfangs-Antennen arbeitenden Spulen 1 werden vorzugsweise gegenphasig betrieben, wodurch sich eine Nullstelle der Einkopplung von diesen Sende/Empfangs-Antennen am Ort der als Empfangsantennen wirkenden Spulen 1' ergibt und eine erwünschte Kompensationswirkung im Fernfeld auftritt.

Als Antennen können in vorteilhafter Weise auch Spulen 1, 1' in der Form einer "8" verwendet werden. Diese haben an sich die bekannten Eigenschaften, dass sie beispielsweise den Durchgangsbereich in der Größe einer Person überdecken und eine gewisse Kompensation des Fernfeldes zeigen, weil die untere Schleife der "8" ein umgekehrtes Magnetfeld zur oberen Schleife erzeugt, so dass sich beide Felder in der Ferne kompensieren. Fig. 5 zeigt die zwei Spulen in Seitenansicht links und rechts von einem Durchgangsbereich.

### Bezugszeichenliste

- 1: Spule
- 1`: Spule
- 2: Karte bzw. ID-Tag
- 3: Pfeil für Energiefluß von Sende/Empfangsantenne zu ID-Tag und Datenzufuhr zu ID-Tag
- 4: Pfeil für Datenableitung von ID-Tag zu Spule 1'
- 4': Pfeil für Datenableitung von ID-Tag zu Spule 1
- 5: Schreib/Lese-Station
- 6: Pfeile für Feldrichtung
- 7: Feldlinien

## Patentansprüche

1. Spulenanordnung für induktive kontaktlose Karten- und ID-Systeme, bei der bei einem Durchgangsbereich beidseitig von diesem auf der einen Seite eine erste Spule (1) und auf der anderen, zur einen Seite gegenüberliegenden Seite eine zweite Spule (1') vorgesehen sind, wobei beide Spulen (1, 1') mit einer Schreib/Lese-Station (5) verbunden sind, **dadurch gekennzeichnet, dass** die erste und die zweite Spule (1, 1') zwischen einem ersten und einem zweiten Zustand alternierend umschaltbar sind, wobei im ersten Zustand die erste Spule (1) als Sendeantenne betrieben wird, während die zweite Spule (1') als Empfangsantenne betrieben wird und im zweiten Zustand die zweite Spule (1') als Sendeantenne betrieben wird, während die erste Spule (1) als Empfangs-Antenne betrieben wird.

2. Spulenanordnung nach Anspruch 1, **dadurch gekennzeichnet, dass** sich im ersten und im zweiten Zustand unterschiedliche Richtungen des elektrischen Feldes an einen beliebigen Punkt im Durchgangsbereich ergeben.

3. Spulenanordnung nach Anspruch 1 oder 2, **dadurch gekennzeichnet, dass** jeweils mehrere, alternierend als Sende Antennen und Empfangsantennen betriebene Spulen parallel zueinander angeordnet sind.

4. Spulenanordnung nach einem der Ansprüche 1 bis 3, **dadurch gekennzeichnet, dass** Spulen (1, 1') in der Form einer "8" übereinander vorgesehen sind.

5. Spulenanordnung nach einem der Ansprüche 1 bis 4, **dadurch gekennzeichnet, dass** die Schreib/Lese-Station (5) ausgebildet ist, Daten mittels der beiden Spulen (1,1') zu senden und zu empfangen.

## Claims

1. Coil arrangement for inductive contact-free card and ID systems, in which, in a passage region, on either side of said passage region, a first coil (1) is provided on one side and a second coil (1') is provided on the other side which is opposite the first side, with the two coils (1, 1') being connected to a write/read station (5), **characterized in that** the first and the second coil (1, 1') can be alternately switched over between a first and a second state, with the first coil (1) being operated as a transmitting antenna while the second coil (1') is operated as a receiving antenna in the first state, and the second coil (1') being operated as a transmitting antenna while the first coil (1) is operated as a receiving antenna in the second state.

2. Coil arrangement according to Claim 1, **characterized in that,** in the first and in the second state, different directions of the electric field are produced at any desired point in the passage region.

3. Coil arrangement according to Claim 1 or 2, **characterized in that** in each case a plurality of coils which are alternately operated as transmitting antennas and receiving antennas are arranged parallel to one another.

4. Coil arrangement according to one of Claims 1 to 3, **characterized in that** coils (1, 1') in the form of an "8" are provided one over the other.

5. Coil arrangement according to one of Claims 1 to 4, **characterized in that** the write/read station (5) is designed to transmit and to receive data by means of the two coils (1, 1').

## Revendications

1. Dispositif de bobine pour des cartes et des systèmes d'identification sans contact à couplage inductif, dans lequel il est prévu, pour une partie de passage des deux côtés de celle-ci, d'un côté une première bobine (1) et de l'autre côté, opposé au premier côté, une deuxième bobine (1'), les deux bobines (1, 1') étant reliées à un poste (5) d'écriture/lecture, **caractérisé en ce que** la première et la deuxième bobines (1,1') peuvent être commutées en alternance entre un premier et un deuxième état, dans lequel dans le premier état la première bobine (1) fonctionne en antenne émettrice, tandis que la deuxième bobine (1') fonctionne en antenne réceptrice et dans le deuxième état la deuxième bobine (1') fonctionne en antenne émettrice, tandis que la première bobine (1) fonctionne en antenne réceptrice.

2. Dispositif de bobine suivant la revendication 1, **caractérisé en ce qu'**il est obtenu, dans le premier et dans le deuxième état, des sens différents du champ électrique en n'importe quel point de la partie de passage.

3. Dispositif de bobine suivant la revendication 1 ou 2, **caractérisé en ce que** respectivement plusieurs bobines fonctionnant en alternance en antenne émettrice et en antenne réceptrice sont montées en parallèle les unes avec les autres.

4. Dispositif de bobine suivant l'une des revendications 1 à 3, **caractérisé en ce qu'**il est prévu des bobines (1,1') les unes sur les autres sous la forme d'un « 8 ».

5. Dispositif de bobine suivant l'une des revendications 1 à 4, **caractérisé en ce que** le poste (5) d'écriture/de lecture est constitué pour émettre et pour recevoir des données au moyen des deux bobines (1,1').
